(19) Europäisches Patentamt
European Patent Office
Office européen des brevets

(11) **EP 3 600 680 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **18710436.9**

(22) Anmeldetag: **08.03.2018**

(51) Int Cl.:
**B04B 1/14** *(2006.01)*    **B04B 11/04** *(2006.01)*
**B01D 21/26** *(2006.01)*    **B01D 21/32** *(2006.01)*

(86) Internationale Anmeldenummer:
**PCT/EP2018/055727**

(87) Internationale Veröffentlichungsnummer:
**WO 2018/177711 (04.10.2018 Gazette 2018/40)**

(54) **VERFAHREN ZUR AUTOMATISIERTEN FESTSTOFFENTLEERUNG VON ZENTRIFUGEN**

METHOD FOR THE AUTOMATED REMOVAL OF SOLIDS FROM CENTRIFUGES

PROCÉDÉ SERVANT À PURGER DE MANIÈRE AUTOMATISÉE DES MATIÈRES SOLIDES DE CENTRIFUGEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2017 DE 102017106796**
**29.05.2017 DE 102017111672**

(43) Veröffentlichungstag der Anmeldung:
**05.02.2020 Patentblatt 2020/06**

(73) Patentinhaber: **GEA Mechanical Equipment GmbH**
**59302 Oelde (DE)**

(72) Erfinder: **BATHELT, Thomas**
**59302 Oelde (DE)**

(74) Vertreter: **Specht, Peter et al**
**Loesenbeck - Specht - Dantz**
**Patent- und Rechtsanwälte**
**Am Zwinger 2**
**33602 Bielefeld (DE)**

(56) Entgegenhaltungen:
**EP-A2- 2 196 266    DE-A1-102013 111 586**
**US-A- 5 318 500**

## Beschreibung

Die Erfindung betrifft ein Verfahren nach dem Oberbegriff des Anspruchs 1.

Die Klärleistung eines selbstentleerenden Separators zum Klären eines zu verarbeitenden Produktes von Feststoffen ist unter anderem durch Parameter wie die Klärfläche eines Tellerpakets, die Größe eines Feststoffraumes in der Trommel, die Auslegung einer Zentripetalpumpe bzw. Schälscheibe zum Austrag der Klarphase, die Antriebsleistung eines Antriebsmotors sowie das eingestellte Zulaufvolumen pro Zeiteinheit (Zulaufmenge) und die im Produkt enthaltene Feststoffmenge bestimmt. Bei vielen selbstentleerenden Separatoren wird die Feststoffentleerung nach einem fest eingestellten Zeitintervall ausgelöst. Die Zeit zwischen zwei Feststoffentleerungen (Entleerungshäufigkeit) hängt von den oben genannten Parametern ab. Wird bei der Feststoffentleerung mehr Volumen entleert als sich Feststoff in der Trommel befindet, führt dies in der Regel zu Produktverlust.

Um dies zu verhindern, wird bei modernen Zentrifugen nicht nur per Zeitintervall entleert, sondern die Feststoffentleerung durch ein Messergebnis ausgelöst, das mit einer Sensoreinrichtung ermittelt wird. So wird nach der EP 2 196 266 A2 die diskontinuierliche Entleerung in Abhängigkeit von der Drehzahl der Trommel überwacht und/oder gesteuert. Rein beispielhaft sei ferner die DE 32 28 074 A1 genannt, nach der eine Trübungsmessung des Klarphasenablaufs zur Feststoffentleerungssteuerung angewendet wird. Zur Steuerung der Feststoffentleerung wird somit eine Messung eines Produktzustandsparameters eingesetzt. Da auch hier das Feststoffentleerungsvolumen konstant eingestellt wird, kann es bei einem Anstieg des Feststoffanteils im Zulauf (z.B. Ausgangsprodukt aus einem Tankbodenkonus) u.U. zu einer deutlichen Erhöhung der Feststoffentleerungshäufigkeit kommen, was zu vermeiden ist. Ergänzend sei an dieser Stelle zudem auf die DE 10 2013 111 586 A1 verwiesen.

Einen anderen Weg geht die US 5 318 500 A1. Nach der technischen Lehre der US 5 318 500 A1 werden auf mathematischen Wege Massenbilanzen und Feststoffbilanzen berechnet, aus denen auf einen optimalen Zeitpunkt zur Feststoffentleerung geschlossen wird. Die dazu nötigen Messwerte sind aber nur relativ aufwendig zu ermitteln, so dass sich dieser Ansatz in der Praxis nicht durchgesetzt hat.

Die Erfindung hat vor diesem Hintergrund die Aufgabe, das gattungsgemäße Verfahren so weiterzuentwickeln, dass mit ihm eine gute Steuerung der Feststoffentleerungen des selbstentleerenden Separators, d.h. bei optimal gefülltem Feststoffraum, und damit des Klärverfahrens insgesamt möglich wird. Ebenso ist es erwünscht, Rückschlüsse auf den Zustand des Separators ziehen zu können.

Die Erfindung löst diese Aufgabe durch das Verfahren des Anspruchs 1. Danach wird ein fließfähiges Ausgangsprodukt mit einem selbstentleerenden Separator, der eine drehbare Trommel mit einem Zulauf, mit wenigstens einem Flüssigkeitsauslass und mit diskontinuierlich zu öffnenden und zu verschließenden Feststoffauslassöffnungen und mit einer Steuerungseinheit aufweist, in einem kontinuierlichen Betrieb in einem Zentrifugalfeld in der sich drehenden Trommel von Feststoffen geklärt, wobei ein kontinuierliches Auslassen wenigstens einer geklärten Flüssigkeitsphase - einer Klarphase - erfolgt und wobei mit den diskontinuierlich öffenbaren und verschließbaren Feststoffauslassöffnungen wiederholt ein diskontinuierliches Auslassen einer Feststoffphase - Feststoffentleerungen genannt - aus einem Feststoffsammelraum der Trommel erfolgt, wobei zumindest folgende Schritte zur Steuerung und/oder Überwachung der Feststoffentleerungen vorgesehen sind:

100: Durchführen einer Feststoffentleerung;

200: Sensieren der Drehzahl der Trommel während der Feststoffentleerung des Schrittes 100 und Bestimmen eines Drehzahlabfalles während der Feststoffentleerung des Schrittes 100;

300: Ermitteln der Masse des ausgetragenen Feststoffs während der Feststoffentleerung des Feststoffsammelraumes unter Verwendung des bestimmten Drehzahlabfalls aus Schritt 200 unter Verwendung eines in der Steuerungseinheit hinterlegten Proportionalitätsfaktors;

400: Bilden der ersten Ableitung dn/dt der Funktion, welche das Verhalten der Drehzahl während der Feststoffentleerung in Abhängigkeit von der Zeit beschreibt (nachfolgend auch bezeichnet als Ableitung der Drehzahländerung dn der Trommel während der Feststoffentleerung des Feststoffsammelraumes nach der Zeit dt);

500: Ermitteln der Dichte p des Feststoffs F während der Feststoffentleerung des Feststoffsammelraumes unter Verwendung der ersten Ableitung dn/dt aus Schritt 400 unter Verwendung eines in der Steuerungseinheit hinterlegten Proportionalitätsfaktors;

600: Bestimmen des Ist-Volumens $V_F$ des Feststoffs F der Feststoffentleerung des Schrittes 100 unter Verwendung der in den Schritten 300 und 500 ermittelten Werte der Masse m und der Dichte p;

700: Vergleichen des im Schritt 600 ermittelten Ist-Volumens $V_F$ der Feststoffentleerung des Schrittes 100 mit einem Soll-Volumen $V_{TR}$ des Feststoffsammelraumes durch Ermitteln eines Differenzvolumens zwischen dem Ist-Volumen $V_F$ und dem Soll-Volumen $V_{TR}$;

(fortgesetzt)

800: Einstellen eines Zeitintervalls bis zu einer nächsten Feststoffentleerung und/oder Einstellung einer Zeitdauer der nächsten Feststoffentleerung in Abhängigkeit des in Schritt 700 ermittelten Differenzvolumens zwischen dem in Schritt 600 bestimmten Ist-Volumens $V_F$ und dem Soll-Volumen $V_{TR}$.

Insgesamt werden mit den beanspruchten Verfahren Produktverluste durch nicht optimale Feststoffentleerungen auf einfache und damit vorteilhafte Weise verringert indem das Volumen $V_{TR}$ des Feststoffsammelraumes optimal genutzt wird. Anwendbar ist das Verfahren mitsamt seinen Varianten nicht nur aber insbesondere auch bei der Klärung von Ausgangsprodukten, deren Trübung nicht mit gutem Ergebnis messbar ist und/oder nicht sinnvoll als Parameter für die Steuerung der Feststoffentleerungen verwendbar ist.

Besonders vorteilhaft ist auch, dass mit dem Verfahren und seinen Varianten, die in den Unteransprüchen angegeben sind, eine weitergehende Zustandsanalyse des rotierenden Systems möglich ist, die ein Ausgeben von Warnungen und/oder ein Verändern von Steuerungsparametern erlaubt.

In einer bevorzugten Ausführungsvariante des Verfahrens wird das Zeitintervall bis zur nächsten Feststoffentleerung verkürzt, wenn das entleerte Ist-Volumen $V_F$ kleiner als das Soll-Volumen $V_{TR}$ ist, um so ein Verbleibenden von Feststoffen im Feststoffsammelraum entgegenzuwirken. In einer weiteren bevorzugten Ausführungsvariante des Verfahrens wird das Zeitintervall bis zur nächsten Feststoffentleerung verlängert, wenn das entleerte Ist-Volumen $V_F$ größer als das Soll-Volumen $V_{TR}$ ist, um so das Mitentleeren der Klarphase entgegenzuwirken. Dadurch wird jeweils vorteilhaft die Feststoffentleerung optimiert.

In einer weiteren bevorzugten Ausführungsvariante des Verfahrens wird in Folge einer ermittelten Veränderung der Dichte p des Feststoffs (F) während der Feststoffentleerung und sowie einer Mitentleerung der Klarphase KP auf eine Verschmutzung des Tellerpakets geschlossen und eine entsprechende Warnung generiert und/oder eine Steuerungsmaßnahme eingeleitet.

Dadurch werden die durch das Verfahren ermittelten Feststoffeigenschaften vorteilhaft auch zum Auffinden von Störungen im Verfahrensablauf und zu dessen gezielter Beseitigung verwendet.

In einer weiteren bevorzugten Ausführungsvariante des Verfahrens wird aufgrund ermittelter Veränderungen der Drehzahländerung dn nach der Zeit dt - dn/dt - bei ansonsten konstanten Produkt- und Maschinen-Parametern auf Verklumpungen, Verklebungen oder Verstopfungen im Tellerpaket, im Feststoffsammelraum oder den Auslassöffnungen geschlossen und eine entsprechende Warnung generiert wird und/oder eine Steuerungsmaßnahme eingeleitet.

Auch hierdurch werden die durch das Verfahren ermittelten Parameter vorteilhaft auch zur Identifizierung von ansonsten unentdeckt bleibenden Störungen im Verfahrensablauf und zu dessen gezielter Beseitigung verwendet.

In einer weiteren bevorzugten Ausführungsvariante des Verfahrens wird durch eine ermittelte Verschiebung in der Volumenbilanz von Ausgangsprodukt, Klarphase und Feststoff ($V_{AP} = V_{KP} + V_F$) bei ansonsten konstanten Produkt- und Maschinen-Parametern auf Verklumpungen, Verklebungen oder Verstopfungen im Tellerpaket, Schlammraum oder der Austrittsöffnungen geschlossen und eine entsprechende Warnung generiert wird und/oder eine Steuerungsmaßnahme eingeleitet.

In einer weiteren bevorzugten Ausführungsvariante des Verfahrens ist die Steuerungsmaßnahme eine Auslösung einer "Reinigungsentleerung". Dadurch wird ein negativer Verfahrensverlauf erkannt vorteilhaft kurzzeitig nach seinem Entstehen erkannt und die Fortführung des Verfahrens vorteilhaft zeitnah abgebrochen und es können Endprodukte mit möglichst homogenen Eigenschaften gewonnen werden.

Weitere vorteilhafte Ausgestaltungen des erfindungsgemäßen Verfahrens sind den Unteransprüchen zu entnehmen.

Die Erfindung wird nachfolgend anhand eines bevorzugten Ausführungsbeispiels unter Bezugnahme auf die beigefügten Zeichnungen näher erläutert. Es zeigt:

Figur 1: eine schematische Schnittansicht eines Separators, welcher nach einem erfindungsgemäßen Verfahren betrieben werden kann;

Figur 2a: ein schematisches Diagramm zur Veranschaulichung einer Sensierung eines Drehzahlabfalls I und II bezogen auf die momentane Drehzahl des Separators;

Figur 2b: ein Diagramm zur Veranschaulichung der Weiterverarbeitung der Daten aus dem Diagramm nach Fig. 2a bezogen auf die Geschwindigkeit des Drehzahlabfalls;

Figur 3a: ein Messschrieb zur Veranschaulichung der Sensierung des Drehzahlabfalls bezogen auf die momentane Drehzahl des Separators;

Figur 3b:     ein Schrieb zur Veranschaulichung der Weiterverarbeitung der Daten aus dem Diagramm nach Fig. 3a bezogen auf die Geschwindigkeit des Drehzahlabfalls;

Figur 4:      ein schematischer Ablaufplan des erfindungsgemäßen Verfahrens.

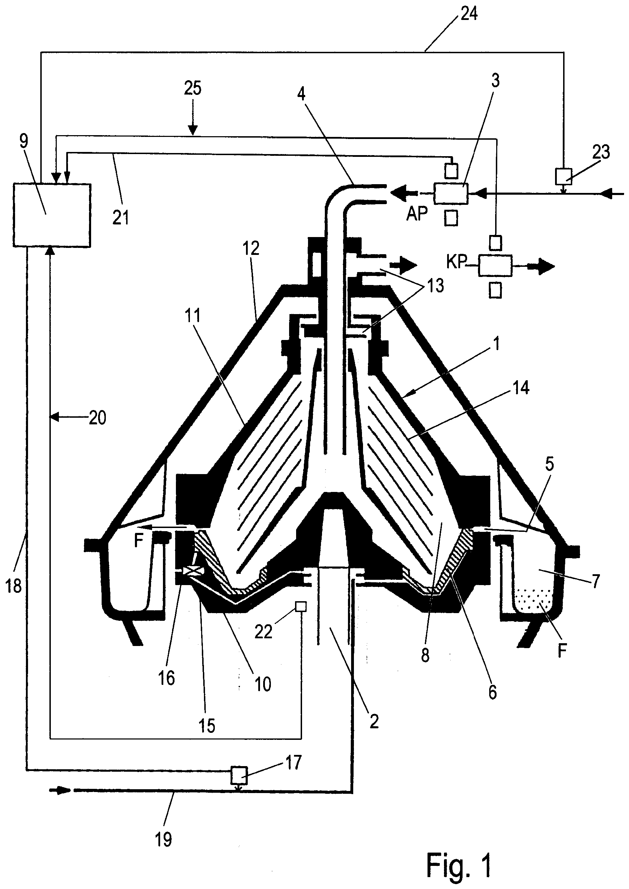

Fig. 1 zeigt einen Separator zum Klären von trübstoffhaltigen, fließfähigen Ausgangsprodukten AP mit einer drehbaren Trommel 1 mit vertikaler Drehachse. Die Verarbeitung des Ausgangsproduktes AP erfolgt im kontinuierlichen Betrieb. Der Separator ist ein selbstentleerender Separator.

Dies bedeutet, dass der Zulauf des Ausgangsprodukt AP kontinuierlich erfolgt und auch das Ableiten wenigstens einer geklärten Flüssigkeitsphase, Klarphase KP genannt, kontinuierlich erfolgt. Die Trommel 1 des Separators verfügt in Ausgestaltung als selbstentleerender Separator über einen diskontinuierlichen Feststoffauslass, wobei der aus dem Ausgangsprodukt AP durch Klärung abgetrennte Feststoff F intervallartig durch das Öffnen und Wiederverschließen von Auslassdüsen bzw. Auslassöffnungen 5 entfernt wird.

Die Trommel 1 weist ein Trommelunterteil 10 und einen Trommeldeckel 11 auf. Sie ist ferner vorzugsweise von einer Haube 12 umgeben. Die Trommel 1 ist zudem auf eine Antriebsspindel 2 aufgesetzt, die drehbar gelagert und motorisch antreibbar ist.

Die Trommel 1 weist einen Produktzulauf 4 auf, durch welchen das Ausgangsprodukt AP in die Trommel 1 geleitet wird. Sie weist ferner wenigstens einen Ablauf 13 - mit einem Greifer versehen -, der zur Ableitung einer Klarphase KP aus der Trommel 1 dient. Der Greifer - auch Schälscheibe genannt - ist eine Zentripetalpumpe. Der Ablauf 13 kann konstruktiv auch auf andere Weise bzw. mit anderen Mitteln erfolgen. Zudem ist es auch denkbar, neben der Klärung auch eine Trennung des Ausgangsproduktes AP in zwei Flüssigkeitsphasen verschiedener Dichte vorzunehmen. Hierzu ist dann ein weiterer Flüssigkeitsablauf erforderlich.

Die Trommel 1 weist vorzugweise ein Tellerpaket 14 aus axial beabstandeten Trenntellern auf. Zwischen dem Außenumfang des Tellerpakets 14 und dem Innenumfang der Trommel 1 im Bereich ihres größten Innendurchmessers ist ein Feststoffsammelraum 8 ausgebildet. Feststoffe, welche im Bereich des Tellerpakets 14 von der Klarphase getrennt werden, sammeln sich in dem Feststoffsammelraum 8, aus dem die Feststoffe F über Auslassöffnungen 5 aus der Trommel 1 ausgetragen werden können.

Die Auslassöffnungen 5 können dazu mittels eines Kolbenschiebers 6, welcher im Trommelunterteil 10 angeordnet ist und in diesem parallel zur Drehachse (insbesondere vertikal) verschiebbar ist, geöffnet und geschlossen werden. Bei geöffneten Auslassöffnungen 5 wird der Feststoff F aus der Trommel 1 in einen Feststofffänger 7 ausgelassen.

Der Feststoffsammelraum 8 weist ein Feststoffraumvolumen $V_{TR}$ auf. Dieses ist auf Grund der definierten und durch die Konstruktion der Trommel und die dadurch bekannte Geometrie des Feststoffsammelraumes 7 bekannt und berechenbar.

Zur Bewegung des Kolbenschiebers 6 weist die Trommel 1 einen Betätigungsmechanismus auf. Hier umfasst dieser wenigstens eine Zuleitung 15 für ein Steuerfluid wie Wasser und eine Ventilanordnung 16 in der Trommel 1 und weitere Elemente außerhalb der Trommel 1. So wird der Zulauf des Steuerfluides wie Wasser über eine außerhalb der Trommel 1 angeordnete Dosieranordnung 17 ermöglicht, welche einer außerhalb der Trommel 1 angeordnete Zulaufleitung 19 für das Steuerfluid zugeordnet ist, so dass für eine Feststoffentleerung des Feststoffs F durch Freigabe der Ventilanordnung 16 das Steuerfluid in die Trommel 1 einleitbar ist oder umgekehrt der Zustrom an Steuerfluid unterbrochen werden kann, um den Kolbenschieber 6 entsprechend zu bewegen, um die Auslassöffnungen 5 freizugeben.

An der Spindel 2 und/oder der Trommel 1 kann zumindest eine Sensoreinrichtung 22 angeordnet, die dazu ausgelegt ist, den momentanen Betrag der Drehzahl der Spindel 2 bzw. die momentane Drehzahl der Trommel bzw. des rotierenden Systems des Separators zu bestimmen. Die wenigstens eine Sensoreinrichtung 22 kann z.B. nach dem Wirkprinzip der Induktion arbeiten. Alternativ kann die Sensoreinrichtung 22 auch nach einem anderen Wirkprinzip, wie z.B. dem Hall-Effekt, arbeiten.

Am oder im Zulauf 4 für das Ausgangsprodukt AP in die Trommel 1 kann ebenfalls eine Sensoreinrichtung 3 zur Bestimmung des Durchflussstromes Volumen/Zeit oder eines oder mehrerer Parameters, wie z.B. Masse/Zeit, des in die Trommel 1 zu leitenden Ausgangsprodukts AP angeordnet sein. Dies ist vorteilhaft, aber nicht zwingend.

Die Sensoreinrichtungen 3 und 22 sind über Datenverbindungen 20, 21 mit der Auswerte- und Steuerungseinheit 9 (vorzugsweise ein Steuerungsrechner des Separators) verbunden, welche die ermittelten Messwerte auswertet bzw. verrechnet und die Bewegung des Kolbenschiebers 6 und damit auch das Zeitintervall bis zur Öffnung der Auslassöffnungen 5 steuert.

Der Betätigungsmechanismus für den Kolbenschieber 6 - hier insbesondere die Dosieranordnung 17 - kann über eine Datenverbindung 18 mit einer Auswerte- und Steuerungseinheit 9 verbunden sein, die auch eine Programmroutine zur Steuerung und/oder Regelung des Feststoffauslass aufweist, die auch dieser als Programm oder Programmteil abläuft. Die Dosieranordnung 17 kann beispielsweise einen Kolben und eines oder mehrere Ventile aufweisen. Sie kann ferner nach Art der DE 10 2005 049 941 A1 ausgestaltet sein, um eine veränderbare Dosierung der Fluidmenge zur Steuerung und Veränderung der Dauer der Feststoffentleerung und damit des aktuellen Feststoffentleerungsvolumen vornehmen zu können. Mit der Dosieranordnung 17 lässt sich das Feststoffentleerungsvolumen variieren, so dass beispielsweise bei steigendem Feststoffgehalt im Zulauf die Feststoffentleerungsvolumen vergrößert werden kann.

Es kann zudem vorzugsweise eine weitere ansteuerbare Einrichtung 23 - beispielsweise ein ansteuerbares Ventil - in den Zulauf 4 geschaltet sein, mit welcher der Volumenstrom im Zulauf veränderlich ist, um die Zulaufmenge bzw. das aktuelle Zulaufvolumen $V_{AP}$ an zu verarbeitendem Ausgangsprodukt AP pro Zeiteinheit zu verändern. Diese ansteuerbare Einrichtung 23 ist über eine Datenverbindung 24 mit der Steuerungseinheit 9 verbunden.

Die vorgenannten Datenverbindungen 18, 20, 21, 24 ermöglichen eine Datenübertragung von oder zur Steuerungs- und Auswerteeinheit 9. Sie können jeweils als Leitungen ausgestaltet sein oder aber jeweils als drahtlose Verbindungen.

Nachfolgend wird ein Ausführungsbeispiel eines Produkt-Klärverfahrens, welches mit dem vorbeschriebenen Separators durchgeführt werden kann, anhand der Figuren näher erläutert.

In die Trommel 1 des Separators wird vorzugsweise kontinuierlich das Ausgangsprodukt AP geleitet, wo dieses geklärt wird. Es erfolgt ein kontinuierlicher Klarphasenauslass der Klarphase KP.

Während der Klärung des Ausgangsproduktes AP unter Bildung der Klarphase KP werden im Ausgangsprodukt AP enthaltene Trubstoffe und andere Feststoffe im Feststoffsammelraum 8 der Trommel 1 außerhalb des Tellerpaketes 14 gesammelt, der sich füllt. Wenn zu viele der Feststoffe in dem Feststoffsammelraum 8 angesammelt sind, beginnt deren Auslass mit der Klarphase KP, was möglichst zu vermeiden ist.

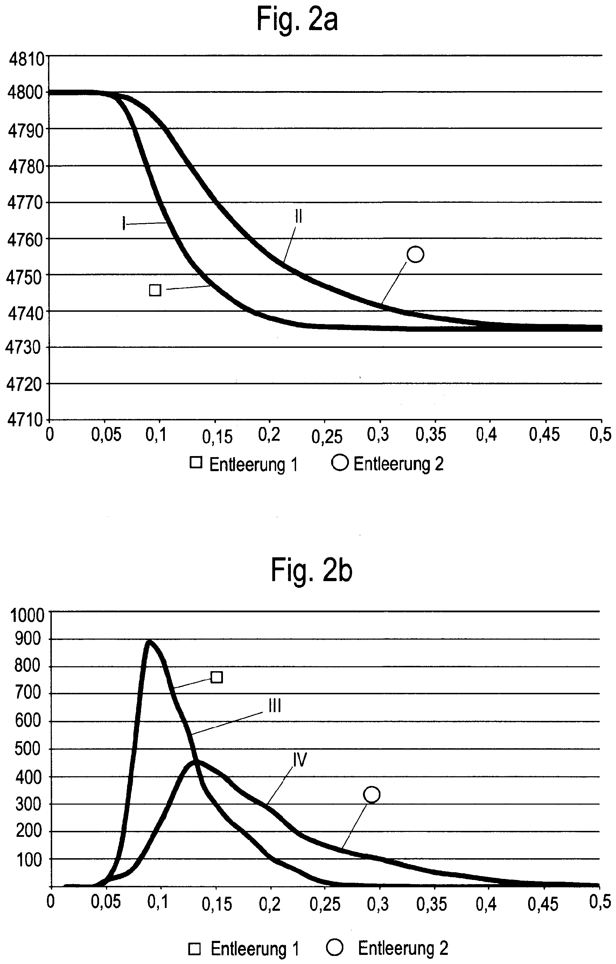

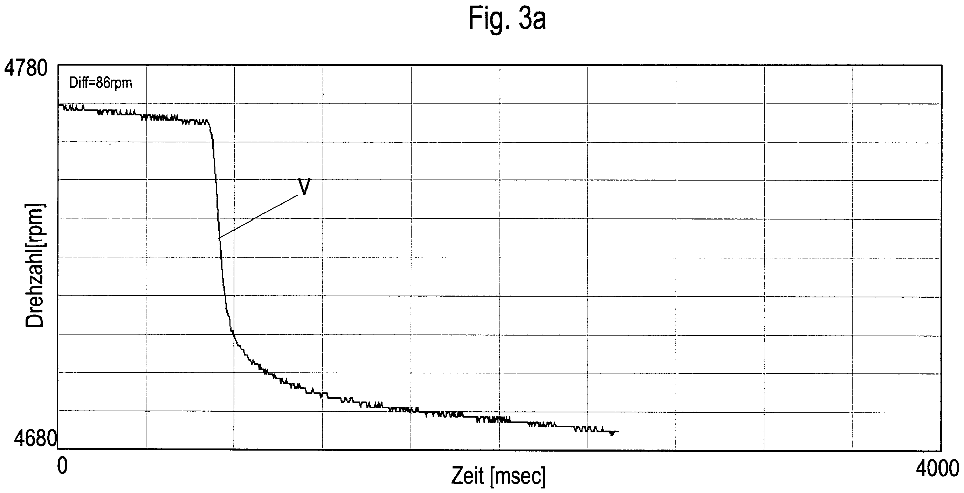

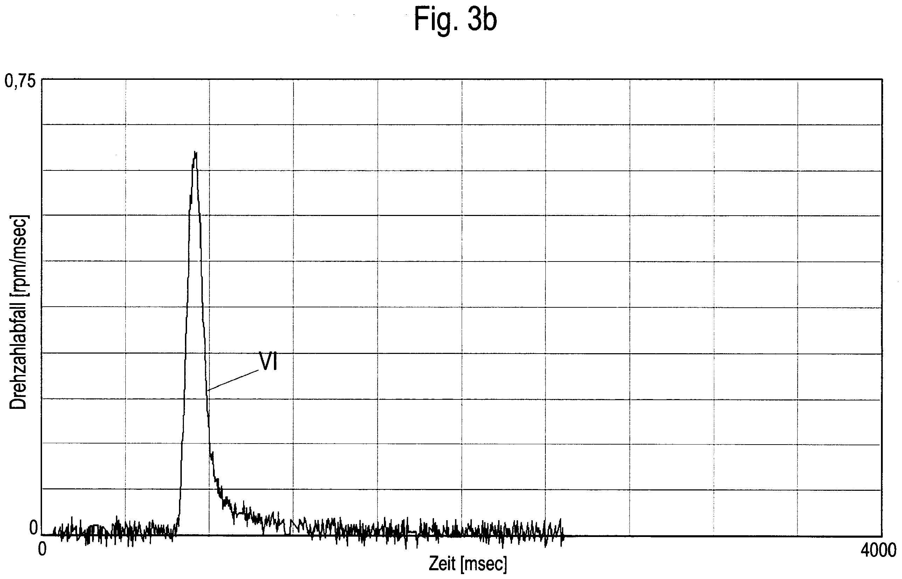

Das erfindungsgemäße Verfahren basiert darauf, einen Drehzahlabfall, d.h. die Drehzahländerung dn der Trommel 1 bei zumindest einer, mehreren oder jeder Feststoffentleerung zu messen. Hierzu wird die Sensoreinrichtung 22 z.B. an der Spindel 2 und/oder eine Drehzahlmesseinrichtung z.B. in der Steuerungs- und Auswerteeinheit 9 genutzt. Aus dem Drehzahlverlauf bei einer Feststoffentleerung sind der zeitliche Verlauf der Drehzahländerung dn und dessen Beträge - exemplarisch in Fig. 2a bzw. Fig. 3a gezeigt- sowie die Ableitung der Drehzahländerung dn nach der Zeit dt - exemplarisch in Fig. 2b bzw. Fig. 3b gezeigt - ermittelbar:

Die Drehzahländerung dn der Spindel 2 bei der Feststoffentleerung ist proportional zur ausgetragenen Masse m des bei der Feststoffentleerung ausgeschleusten Feststoffs F:

dn ~ m

Über den Drehzahlabfall $\Delta n = n_1 - n_2$ -bei der Feststoffentleerung erfolgt eine Reduzierung der Drehzahl, also ein Drehzahlabfall- der Trommel 1 kann die ausgetragene Masse m ermittelt werden. Hierzu wird der Energieverlust $\Delta E_{rot}$ der Trommel 1 mit bekanntem Massenträgheitsmoment $J_{Tr}$, bekanntem Radius r und der Drehzahländerung $\Delta n$ mit der Energie $E_{kin}$ der auf dem Radius r ausgetragenen Masse m gleich gesetzt. Als Drehzahl wird hierzu vereinfachend der Mittelwert $\frac{1}{2}(n_1 + n_2)$ angenommen und sowohl die radiale als auch die tangentiale Geschwindigkeitskomponente der ausgetragenen Masse berücksichtigt.

In einer vereinfachten Betrachtung ergibt sich:

$$\Delta E_{rot} = 2\pi^2 J_{Tr} (n_1^2 - n_2^2)$$

und

$$E_{kin} = \pi^2 mr^2 (n_1 + n_2)^2$$

$$m = 2J_{Tr} (n_1^2 - n_2^2) / (r^2 (n_1 + n_2)^2)$$

Die Ableitung der Funktion, welche das Verhalten der Drehzahl während der Feststoffentleerung in Abhängigkeit von der Zeit beschreibt (also dn/dt) ist proportional zur Dichte p des ausgetragenen Mediums und damit zur Konzentration des Feststoffs F.

dn/dt ~ p

Das bedeutet, dass die Drehzahländerung dn/dt bei einem Produkt mit hoher Dichte p stärker bzw. größer bzw. rapider ist und umgekehrt.

Dies ist in Fig. 2a gut nachvollziehbar dargestellt. Graph I charakterisiert den Drehzahlverlauf eines ausgetragenen Mediums mit hoher Dichte p, während Graph II den Drehzahlverlauf eines solchen mit niedriger Dichte p charakterisiert. Beide Graphen I, II zeigen, dass in beiden Fällen die gleiche Masse m ausgetragen wird, da bei beiden Graphen I, II die gleiche reduzierte Drehzahl erreicht wird.

Noch deutlicher wird dies in Fig. 2b, die die jeweils erste Ableitung der Graphen I und II aus Fig. 2a zeigt. Dabei zeigt Graph III den Steigungsverlauf von Graph I und Graph IV den Steigungsverlauf von Graph II. Es ist deutlich, dass das Maximum der Steigung von Graph I größer ist als das Maximum der Steigung von Graph II.

Der genaue Zusammenhang, d.h. das Ermitteln eines Proportionalitätsfaktors hierzu kann durch Versuche für jedes Produkt ermittelt werden. Für verschiedene Separatoren mit ihren individuellen Massenträgheitsmomenten, Antrieben und Drehzahlen entstehen so Kennlinienfelder, die in der Steuerungseinheit 9 hinterlegt sind.

Mit Hilfe der Formel:

$$V = m/\rho$$

und den oben dargestellten Zusammenhängen, sowie den aus Versuchen gefundenen Proportionalitätsfaktoren, lässt sich das ausgetragene Ist-Volumen $V_F$ des Feststoffes F aus den Messungen des zeitlichen Drehzahlverlaufs und der Bestimmung der ersten Ableitung dn/dt ermitteln.

Mit diesen Informationen kann dann die nachfolgende Feststoffentleerung adaptiv gesteuert werden, wodurch insbesondere das Zeitintervall bis zur nächsten Feststoffentleerung vorteilhaft adaptiv verändert werden kann.

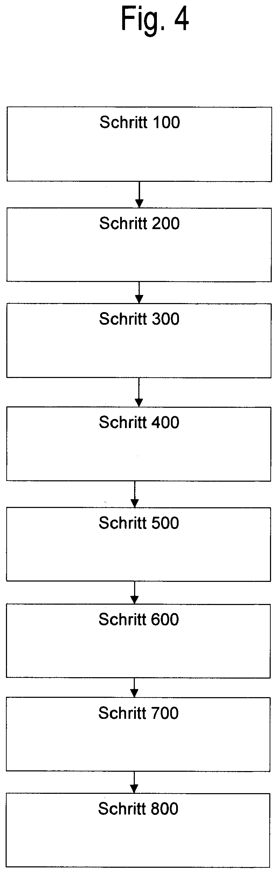

Für das automatisierte Entleeren von Feststoff F aus einem Separator wird folgendes Verfahren angegeben: Das Verfahren - siehe Fig. 4 - startet im Schritt 100. In Schritt 100 wird der Feststoff F aus dem Feststoffsammelraum 8 mit Hilfe des Kolbenschiebers 6 des Separators entleert.

Zumindest während der Feststoffentleerung des Feststoffraumes 8 wird in definierten diskreten Zeitabständen, vorzugsweise quasi-kontinuierlich in einem weiteren Schritt 200 die Drehzahl der Trommel 1 durch die Sensoreinrichtung 22 oder eine andere Drehzahlmesseinrichtung sensiert.

In einem weiteren Schritt 300 wird über den Betrag der Drehzahländerung Δn der Trommel 1 während der Feststoffentleerung die Masse m des während der Feststoffentleerung ausgetragenen Feststoffs F unter Verwendung bzw. Zuhilfenahme eines in der Steuerungseinheit 9 hinterlegten Proportionalitätsfaktors ermittelt.

In einem darauf folgenden Schritt 400 wird die erste Ableitung der Drehzahländerung dn nach der Zeit dt gebildet.

In einem weiteren Schritt 500 wird über die erste Ableitung der Drehzahländerung dn/dt der Trommel 1 während der Feststoffentleerung die Dichte p des während der Feststoffentleerung ausgetragenen Feststoffs F unter Verwendung eines in der Steuerungseinheit 9 hinterlegten, durch Messungen vorbestimmten, Proportionalitätsfaktors ermittelt.

In einem darauf folgenden Schritt 600 wird das ausgetragene Ist-Volumen $V_F$ des Feststoffs F unter Verwendung der in den Schritten 300 und 400 ermittelten Werte der Masse m und der Dichte p bestimmt.

In einem weiteren Schritt 700 wird das im Schritt 600 ermittelte, ausgetragene Ist-Volumen $V_F$ des Feststoffs F mit dem bekannten Soll-Volumen $V_{TR}$ des Feststoffsammelraumes 8 verglichen, in dem ein Differenzvolumen gebildet wird.

Mit diesen Informationen kann dann die nachfolgende Feststoffentleerung adaptiv gesteuert und optimiert werden: In einem Schritt 800 erfolgt insofern eine Einstellung eines Zeitintervalls bis zu einer nächsten Feststoffentleerung und/oder Einstellung einer Zeitdauer der nächsten Feststoffentleerung.

Ist das entleerte Ist-Volumen $V_F$ kleiner als das Soll-Volumen $V_{TR}$, führt dies beispielsweise zu einer Verkürzung des Zeitintervalls bis zur nächsten Feststoffentleerung, um ein mögliches Ansammeln von Feststoff F in der Trommel 1 zu verhindern (umgekehrtes Verhalten bei zu großen Feststoffentleerungen)

Eine Abweichung vom entleerten Ist-Volumen $V_F$ zum Soll-Volumen $V_{TR}$ führt zu einer Veränderung der Zeitintervalle, nach denen der Feststoff F über die Auslassöffnungen 5 die Trommel 1 verlässt, wozu jeweils der Kolbenschieber 6 mit Fluid ("Steuerwasser") beaufschlagt wird, um die zukünftigen Ist-Volumen $V_F$ weiter dem Soll-Volumen $V_{TR}$ anzunähern.

Abweichungen von der gewünschten Dichte p des Feststoffs F können ebenfalls durch gezielte Veränderungen der Intervallzeiten und/oder dem entleerten Ist-Volumen $V_F$ zur Anpassung an das Soll-Volumen $V_{TR}$ genutzt werden.

Bei klebrigen Feststoffen F kann eine Veränderung der Dichte p, die so interpretiert wird, dass der Feststoff F zwischen den Tellern klebt und somit Klarphase KP mitentleert wird, benutzt werden, um eine entsprechende Warnung generiert wird und/oder eine Steuerungsmaßnahme eingeleitet wird.

Veränderungen der Drehzahländerung dn nach der Zeit dt bei ansonsten konstanten Produkt- und Maschinen-Parametern, lassen auf Faktoren wie Verklumpungen, Verklebungen oder Verstopfungen im Tellerpaket 14, im Feststoffsammelraum 8 oder den Auslassöffnungen 5 schließen. Diese Informationen können benutzt werden, um eine entsprechende Warnung zu generieren und/oder eine Steuerungsmaßnahme einzuleiten.

Eine Verschiebung in der Volumenbilanz ($V_{AP} = V_{KP} + V_F$) bei ansonsten konstanten Produkt- und Maschinen-Parametern, lässt ebenfalls auf Faktoren wie Verklumpungen, Verklebungen oder Verstopfungen im Tellerpaket, Schlammraum oder der Austrittsöffnungen schließen. Diese Informationen können benutzt werden, um eine entsprechende Warnung zu generieren und/oder eine Steuerungsmaßnahme einzuleiten.

Eine geeignete Steuerungsmaßnahe, um den ob erwähnten Störungen im Verfahrensablauf zu begegnen, ist beispielsweise eine bedarfsgerechte "Reinigungsentleerungen" (z.B. Vollentleerungen) auszulösen.

Insgesamt werden mit den dargestellten und beanspruchten Verfahren Produktverluste durch nicht optimale Feststoffentleerungen auf einfache und damit vorteilhafte Weise verringert. Ebenso ermöglicht sie Rückschlüsse auf den Zustand des Separators zu ziehen.

**Bezugszeichenliste**

| | |
|---|---|
| 1 | Trommel |
| 2 | Spindel |
| 3 | Sensor |
| 4 | Zulauf |
| 5 | Auslassöffnungen |
| 6 | Kolbenschieber |
| 7 | Feststofffänger |
| 8 | Feststoffsammelraum |
| 9 | Steuerungseinheit |
| 10 | Trommelunterteil |
| 11 | Trommeldeckel |
| 12 | Haube |
| 13 | Ablauf |
| 14 | Tellerpaket |
| 15 | Leitung für Hydraulikflüssigkeit |
| 16 | Ventil |
| 17 | Dosieranordnung |
| 18 | Datenverbindung |
| 19 | Hydraulikleitung |
| 20 | Datenverbindung |
| 21 | Datenverbindung |
| 22 | Sensoreinrichtung |
| 23 | Ansteuerbare Einrichtung |
| 24,25 | Datenverbindung |

| | |
|---|---|
| KP | Klarphase |
| AP | Ausgangsprodukt |
| F | Feststoffe |
| $V_F$ | Ist-Volumen |
| $V_{TR}$ | Soll-Volumen |

| | |
|---|---|
| dn | Drehzahländerung |
| dt | Zeit |
| m | Masse |
| $E_{rot}$ | Rotationsenergie |
| $E_{kin}$ | kinetische Energie |

| | |
|---|---|
| I, II, II, IV, V, VI | Graph |

**Patentansprüche**

1. Verfahren, mit dem ein fließfähiges Ausgangsprodukt (AP) mit einem selbstentleerenden Separator, der eine drehbare Trommel (1) mit einem Zulauf (4), mit wenigstens einem Flüssigkeitsauslass (13) mit diskontinuierlich zu öffnenden und zu verschließenden Feststoffauslassöffnungen (5) und mit einer Steuerungseinheit (9) aufweist, in einem kontinuierlichen Betrieb in einem Zentrifugalfeld in der sich drehenden Trommel (1) von Feststoffen geklärt wird, wobei ein kontinuierliches Auslassen wenigstens einer geklärten Flüssigkeitsphase - einer Klarphase (KP) - erfolgt und wobei mit den diskontinuierlich zu öffnenden und zu verschließenden Feststoffauslassöffnungen (5) wiederholt ein diskontinuierliches Auslassen einer Feststoffphase (F) - Feststoffentleerungen genannt -, aus einem Feststoffsammelraum der Trommel (1) erfolgt, **gekennzeichnet durch** zumindest folgende Schritte zur Steuerung und/oder Überwachung der Feststoffentleerungen:

100: Durchführen einer Feststoffentleerung;

200: Sensieren einer Drehzahl der Trommel (1) während der Feststoffentleerung des Schrittes 100 und Bestimmen eines Drehzahlabfalles der Trommel (1);

300: Ermitteln der Masse (m) des ausgetragenen Feststoffs (F) während der Feststoffentleerung des Feststoffsammelraumes (8) unter Verwendung des bestimmten Drehzahlabfalls aus Schritt 200 unter Verwendung eines in einer Steuerungseinheit (9) hinterlegten Proportionalitätsfaktors;

400: Bilden der ersten Ableitung dn/dt der Drehzahländerung dn nach der Zeit dt der Trommel (1) während der Feststoffentleerung des Feststoffsammelraumes (8);

500: Ermitteln der Dichte p des Feststoffs (F) während der Feststoffentleerung des Feststoffsammelraumes (8) unter Verwendung der ersten Ableitung der Funktion des Drehzahlabfalls dn nach der Zeit dt aus Schritt 400 unter Verwendung eines in der Steuerungseinheit (9) hinterlegten Proportionalitätsfaktors;

600: Bestimmen des Ist-Volumens ($V_F$) des Feststoffs (F) der Feststoffentleerung des Schrittes 100 unter Verwendung der in den
Schritten 300 und 500 ermittelten Werte der Masse (m) und der Dichte (p);

700: Vergleichen des im Schritt 600 ermittelten Ist-Volumens ($V_F$) der Feststoffentleerung des Schrittes 100 mit einem Soll-Volumen ($V_{TR}$) des Feststoffsammelraumes (8) durch Ermitteln eines Differenzvolumens zwischen dem Ist-Volumen ($V_F$) und dem Soll-Volumen ($V_{TR}$);

800: Einstellen eines Zeitintervalls bis zu einer nächsten Feststoffentleerung und/oder Einstellung einer Zeitdauer der nächsten Feststoffentleerung in Abhängigkeit des in Schritt 700 ermittelten Differenzvolumens zwischen dem in Schritt 600 bestimmten Ist-Volumens ($V_F$) und dem Soll-Volumen ($V_{TR}$).

2. Verfahren nach Anspruch 1, **dadurch gekennzeichnet, dass** im Schritt 800 das Zeitintervall bis zur nächsten Feststoffentleerung verkürzt wird, wenn das entleerte Ist-Volumen ($V_F$) kleiner als das Soll-Volumen ($V_{TR}$) ist.

3. Verfahren nach Anspruch 1, **dadurch gekennzeichnet, dass** im Schritt 800 das Zeitintervall bis zur nächsten Feststoffentleerung verlängert wird, wenn das entleerte Ist-Volumen ($V_F$) größer als das Soll-Volumen ($V_{TR}$) ist.

4. Verfahren nach einem der vorgenannten Ansprüche, **dadurch gekennzeichnet, dass** in Folge einer in Schritt 500 ermittelten Veränderung der Dichte p des Feststoffs (F) während der Feststoffentleerung und sowie einer Mitentleerung der Klarphase KP auf eine Verschmutzung des Tellerpakets geschlossen wird und das eine entsprechende Warnung generiert wird und/oder eine Steuerungsmaßnahme eingeleitet wird.

5. Verfahren nach einem der vorgenannten Ansprüche, **dadurch gekennzeichnet, dass** aufgrund ermittelter Veränderungen der in Schritt 400 ermittelten Drehzahländerung (dn) nach der Zeit (dt) - dn/dt - bei ansonsten konstanten Produkt- und Maschinen-Parametern auf Verklumpungen, Verklebungen oder Verstopfungen im Tellerpaket (14), im Feststoffsammelraum (8) oder den Auslassöffnungen (5) geschlossen wird und das eine entsprechende Warnung generiert wird und/oder eine Steuerungsmaßnahme eingeleitet wird.

6. Verfahren nach einem der vorgenannten Ansprüche, **dadurch gekennzeichnet, dass** durch eine unter Verwendung der in Schritt 700 erfolgten Vergleichs des Ist-Volumen ($V_F$) mit dem Soll-Volumen ($V_{TR}$) des Feststoffs (F) ermittelte Verschiebung in der Volumenbilanz ($V_{Produkt} = V_{Klarphase} + V_{Feststoff}$) bei ansonsten konstanten Produkt- und Maschinen-Parametern auf Verklumpungen, Verklebungen oder Verstopfungen im Tellerpaket, Schlammraum oder der Austrittsöffnungen geschlossen wird und dass eine entsprechende Warnung generiert wird und/oder eine Steuerungsmaßnahme eingeleitet wird.

7. Verfahren nach einem der vorgenannten Ansprüche, **dadurch gekennzeichnet, dass** die Steuerungsmaßnahme eine Auslösung einer "Reinigungsentleerung" ist.

8. Verfahren nach einem der vorgenannten Ansprüche, **dadurch gekennzeichnet, dass** die Drehzahl der Spindel (2) mit einer Sensoreinrichtung (22) sensiert wird, die nach einem induktiven Wirkprinzip oder dem Hall-Effekt arbeitet.

9. Verfahren nach einem der vorgenannten Ansprüche, **dadurch gekennzeichnet, dass** in dem Schritt 200 die Drehzahl der Trommel (1) in definierten diskreten Zeitabständen, vorzugsweise quasi-kontinuierlich, durch die Sensoreinrichtung (22) sensiert wird.

**Claims**

1. Method, by which a flowable starting product (AP) is clarified of solids by means of a self-evacuating separator which has a rotatable drum (1) with an inlet (4), with at least one liquid outlet (13), with solids outlet openings (5) that are to be opened and closed discontinuously, and with a control unit (9), in continuous operation in a centrifugal field in the rotating drum (1), wherein at least one clarified liquid phase - a clear phase (KP) - is discharged continuously, and wherein a solids phase (F) is repeatedly discharged discontinuously - referred to as solids evacuations - from a solids collection space of the drum (1) by means of the solids outlet openings (5) that are to be opened and closed discontinuously, **characterized by** at least the following steps for controlling and/or monitoring the solids evacuations:

   100: carrying out a solids evacuation;
   200: sensing a rotational speed of the drum (1) during the solids evacuation in step 100 and ascertaining a reduction in the rotational speed of the drum (1);
   300: determining the mass (m) of the discharged solids (F) during the solids evacuation of the solids collection space (8) by using the ascertained reduction in the rotational speed from step 200, using a proportionality factor stored in a control unit (9);
   400: forming the first derivative dn/dt of the change in rotational speed dn over time dt of the drum (1) during the solids evacuation of the solids collection space (8);
   500: determining the density p of the solids (F) during the solids evacuation of the solids collection space (8) by using the first derivative of the function of the reduction in rotational speed dn over time dt from step 400, using a proportionality factor stored in the control unit (9);
   600: ascertaining the actual volume ($V_F$) of the solids (F) of the solids evacuation of step 100 by using the values of the mass (m) and density (p) determined in steps 300 and 500;
   700: comparing the actual volume ($V_F$) of the solids evacuation of step 100, determined in step 600, with a target volume ($V_{TR}$) of the solids collection space (8) by determining a difference in volume between the actual volume ($V_F$) and the target volume ($V_{TR}$);
   800: adjusting a time interval until a next solids evacuation and/or adjusting a duration of the next solids evacuation as a function of the difference in volume, determined in step 700, between the actual volume ($V_F$) ascertained in step 600 and the target volume (VTR).

2. Method according to claim 1, **characterized in that**, in step 800, the time interval until the next solids evacuation is shortened if the actual volume ($V_F$) evacuated is smaller than the target volume ($V_{TR}$).

3. Method according to claim 1, **characterized in that**, in step 800, the time interval until the next solids evaluation is lengthened if the actual volume ($V_F$) evacuated is larger than the target volume ($V_{TR}$).

4. Method according to any one of the preceding claims, **characterized in that** fouling of the disc stack is inferred as a result of a change, determined in step 500, in the density p of the solids (F) during the solids evacuation and a co-evacuation of the clear phase KP, and **in that** a warning to this effect is generated and/or a control measure is initiated.

5. Method according to any one of the preceding claims, **characterized in that** clumping, adhesion or clogging in the disc stack (14), in the solids collection space (8) or in the outlet openings (5) is inferred based on determined variations in the change in rotational speed (dn) over time (dt) - dn/dt - determined in step 400, while other product and machine parameters remain constant, and **in that** a warning to this effect is generated and/or a control measure is initiated.

6. Method according to any one of the preceding claims, **characterized in that** clumping, adhesion or clogging in the disc stack, in the sludge space or in the outlet openings is inferred due to a shift in the volume balance ($V_{product} = V_{clearphase} + V_{solids}$) that is determined by using the comparison, carried out in step 700, of the actual volume ($V_F$)

and the target volume ($V_{TR}$) of the solids (F), while other product and machine parameters remain constant, and **in that** a warning to this effect is generated and/or a control measure is initiated.

7. Method according to any one of the preceding claims, **characterized in that** the control measure is a triggering of a "cleaning evacuation".

8. Method according to any one of the preceding claims, **characterized in that** the rotational speed of the spindle (2) is sensed by a sensor device (22) which operates according to an inductive operating principle or according to the Hall effect.

9. Method according to any one of the preceding claims, **characterized in that**, in step 200, the rotational speed of the drum (1) is sensed by the sensor device (22) at defined, discrete time intervals, preferably quasi-continuously.

**Revendications**

1. Procédé au moyen duquel un produit de départ fluide (AP) est clarifié des matières solides au moyen d'un séparateur à vidange automatique qui présente un tambour rotatif (1) avec une entrée (4), avec au moins une sortie de liquide (13) comportant des ouvertures de sortie de matière solide (5) destinées à être ouvertes et fermées de manière discontinue et avec une unité de commande (9), lors d'un fonctionnement continu dans un champ centrifuge dans le tambour (1) en rotation, dans lequel une sortie continue d'au moins une phase liquide clarifiée - une phase claire (KP) - a lieu et dans lequel une sortie discontinue d'une phase solide (F) - appelée vidanges de matière solide

- d'une chambre collectrice de matière solide du tambour (1) a lieu de manière répétée par les ouvertures de sortie de matière solide (5) destinées à être ouvertes et fermées de manière discontinue,
**caractérisé par** au moins les étapes suivantes pour commander et/ou surveiller les vidanges de matière solide :

100 : exécution d'une vidange de matière solide ;

200 : détection d'une vitesse de rotation du tambour (1) pendant la vidange de matière solide de l'étape 100 et détermination d'une baisse de vitesse de rotation du tambour (1) ;

300 : détermination de la masse (m) de la matière solide déchargée (F) pendant la vidange de matière solide de la chambre collectrice de matière solide (8) en utilisant la baisse de vitesse de rotation déterminée à l'étape 200 et en utilisant un facteur de proportionnalité stocké dans une unité de commande (9) ;

400 : formation de la dérivée première dn/dt de la variation de vitesse de rotation dn par rapport au temps dt du tambour (1) pendant la vidange de matière solide de la chambre collectrice de matière solide (8) ;

500 : détermination de la densité p de la matière solide (F) pendant la vidange de matière solide de la chambre collectrice de matière solide (8) en utilisant la dérivée première de la fonction de la baisse de vitesse de rotation dn par rapport au temps dt de l'étape 400 en utilisant un facteur de proportionnalité stocké dans l'unité de commande (9) ;

600 : détermination du volume réel ($V_F$) de la matière solide (F) de la vidange de matière solide de l'étape 100 en utilisant les valeurs de masse (m) et de densité (p) déterminées aux étapes 300 et 500 ;

700 : comparaison du volume réel ($V_F$) de la vidange de matière solide de l'étape 100 déterminé à l'étape 600 avec un volume de consigne ($V_{TR}$) de la chambre collectrice de matière solide (8) par détermination d'un volume différentiel entre le volume réel ($V_F$) et le volume de consigne ($V_{TR}$) ;

800 : réglage d'un intervalle de temps jusqu'à une prochaine vidange de matière solide et/ou réglage d'une durée de la prochaine vidange de matière solide en fonction du volume différentiel déterminé à l'étape 700 entre le volume réel ($V_F$) déterminé à l'étape 600 et le volume de consigne ($V_{TR}$).

2. Procédé selon la revendication 1, **caractérisé en ce que**, à l'étape 800, l'intervalle de temps jusqu'à la prochaine vidange de matière solide est raccourci si le volume réel vidangé ($V_F$) est inférieur au volume de consigne ($V_{TR}$).

3. Procédé selon la revendication 1, **caractérisé en ce que**, à l'étape 800, l'intervalle de temps jusqu'à la prochaine vidange de matière solide est prolongé si le volume réel vidangé ($V_F$) est supérieur au volume de consigne ($V_{TR}$).

4. Procédé selon l'une des revendications précédentes, **caractérisé en ce que**, à la suite d'un changement de la densité p de la matière solide (F) déterminée à l'étape 500 pendant la vidange de matière solide et une vidange simultanée de la phase claire KP, il est conclu à une contamination du paquet de disques et qu'un avertissement correspondant est généré et/ou une mesure de commande est initiée.

5. Procédé selon l'une des revendications précédentes, **caractérisé en ce que**, sur la base de changements déterminés de la variation de vitesse de rotation (dn) par rapport au temps (dt) - dn/dt - déterminée à l'étape 400, avec des paramètres de produit et de machine constants par ailleurs, il est conclu à la présence d'agglutinations, d'adhérences ou de colmatages dans le paquet de disques (14), dans la chambre collectrice de matière solide (8) ou dans les ouvertures de sortie (5), et qu'un avertissement correspondant est généré et/ou une mesure de commande est initiée.

6. Procédé selon l'une des revendications précédentes, **caractérisé en ce qu'**un déplacement dans le bilan volumique ($V_{produit} = V_{phase\ claire} + V_{matière\ solide}$) déterminé en utilisant la comparaison du volume réel ($V_F$) avec le volume de consigne ($V_{TR}$) de la matière solide (F) effectuée à l'étape 700, avec des paramètres de produit et de machine constants par ailleurs, est utilisé pour conclure à la présence d'agglutinations, d'adhérences ou de colmatages dans le paquet de disques, la chambre à boues ou les ouvertures de sortie, et qu'un avertissement correspondant est généré et/ou une mesure de commande est initiée.

7. Procédé selon l'une des revendications précédentes, **caractérisé en ce que** la mesure de commande est le déclenchement d'une « vidange de nettoyage ».

8. Procédé selon l'une des revendications précédentes, **caractérisé en ce que** la vitesse de rotation de la broche (2) est détectée avec un dispositif capteur (22) fonctionnant selon un principe inductif ou l'effet Hall.

9. Procédé selon l'une des revendications précédentes, **caractérisé en ce que**, à l'étape 200, la vitesse de rotation du tambour (1) est détectée par le dispositif capteur (22) à des intervalles de temps discrets définis, de préférence de manière quasi continue.

Fig. 1

## Fig. 2a

□ Entleerung 1    ○ Entleerung 2

## Fig. 2b

□ Entleerung 1    ○ Entleerung 2

Fig. 3a

Diff=86rpm

V

4780

4680

Drehzahl[rpm]

0

4000

Zeit [msec]

# Fig. 3b

EP 3 600 680 B1

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2196266 A2
- DE 3228074 A1
- DE 102013111586 A1
- US 5318500 A1
- DE 102005049941 A1